# EUROPÄISCHE PATENTSCHRIFT

(11) **EP 3 497 438 B1**
(45) Veröffentlichungstag und Bekanntmachung des Hinweises auf die Patenterteilung: **29.06.2022**
(21) Anmeldenummer: 17749703.9
(22) Anmeldetag: 08.08.2017
(51) Int. Cl.: G01N 27/90, A24C 5/345, A24C 5/34, G01V 3/10

(54) **MESSVORRICHTUNG UND VERFAHREN ZUM ERKENNEN VON ELEKTRISCH LEITENDEN ELEMENTEN IN PRODUKTEN SOWIE EINE MASCHINE ZUM HERSTELLEN VON PRODUKTEN DER TABAK VERARBEITENDEN INDUSTRIE**
MEASURING APPARATUS AND METHOD FOR DETECTING ELECTRICALLY CONDUCTIVE ELEMENTS IN PRODUCTS AND A MACHINE FOR PRODUCING PRODUCTS OF THE TOBACCO-PROCESSING INDUSTRY
DISPOSITIF DE MESURE ET PROCÉDÉ PERMETTANT DE DÉTECTER DES ÉLÉMENTS ÉLECTROCONDUCTEURS DANS DES PRODUITS AINSI QUE MACHINE DE FABRICATION DE PRODUITS DE L'INDUSTRIE DU TRAITEMENT DU TABAC

(30) Priorität: 15.08.2016 DE 102016115098
(43) Veröffentlichungstag der Anmeldung: 19.06.2019
(73) Patentinhaber: Hauni Maschinenbau GmbH, 21033 Hamburg (DE)
(72) Erfinder: MÜLLER, Johannes, 22767 Hamburg (DE)
(74) Vertreter: Müller Verweyen
(86) Internationale Anmeldenummer: PCT/EP2017/070039
(87) Internationale Veröffentlichungsnummer: WO 2018/033430

(56) Entgegenhaltungen:
- EP-A1- 1 330 961
- CN-A- 103 475 350
- DE-C1- 4 424 058
- GB-A- 2 204 414
- US-A- 5 016 653

## Beschreibung

Die vorliegende Erfindung betrifft ein Verfahren zum Erkennen von in einem Materialstrom oder -strang oder stabförmigen Artikel der Tabak verarbeitenden Industrie befindlichen elektrisch leitenden Elementen sowie eine Maschine zum Herstellen von Produkten der Tabak verarbeitenden Industrie nach dem Oberbegriff von Anspruch 1.

Das Erkennen bzw. Prüfen von Elementen in Produkten, Zwischenprodukten oder den Rohstoffen der Tabak verarbeitenden Industrie ist wichtig, um die Qualität der hergestellten Produkte zu sicherzustellen. Neben Elementen wie flüssigkeitsgefüllten Kapseln, die in einen Zigarettenfilter eingelegt werden und hinsichtlich eines evtl. Defekts und/oder der Lage der Kapsel überprüft werden, gibt es auch elektrische leitende Elemente, die gewollt oder ungewollt in dem Materialstrom oder -strang oder stabförmigen Artikel vorhanden sein können. Bei den gewollten Elementen kann es sich zum Beispiel um Charcoal, Metallgranulat oder auch Metallstreifen handeln. Metallgranulat und/oder Metallstreifen werden zum Beispiel zum Zwecke der Fälschungssicherheit in die stabförmigen Artikel eingelegt, wie zum Beispiel in der DE 19947282 A1, Spalte 2, Zeilen 64-68, Spalte 3, Zeilen 9-23 und in der US 6691493 B1, Fig. 2 und 3, Spalte 5, Zeilen 48-Spalte 6, Zeile 14, Spalte 8, Zeile 18-Spalte 9, Zeile 16 beschrieben.

Bei ungewollten elektrisch leitenden Elementen kann es sich um metallische Fremdkörper handeln, die erkannt werden müssen, um sie aus Materialstrom zu entfernen oder, sofern sie in einem Materialstrang oder stabförmigen Artikel gefunden wurden, den entsprechenden Strangbereich oder den Artikel zu entfernen. Für die Erkennung von metallischen Fremdkörpern ist die Verwendung von Metalldetektoren bekannt. Sie umfassen eine oder mehrere Spulen, deren Achse parallel zum Förderstrom des durch die Spulen hindurchbewegten Gutes angeordnet ist und deren magnetisches Wechselfeld somit parallel zum Förderstrom ausgerichtet ist. Metalldetektoren mit derartiger Spulenanordnung haben den Nachteil, dass im Förderstrom des Gutes befindliche metallische Fremdkörper, deren auf die Kreisfläche senkrecht zum Förderstrom projizierte Querschnittsfläche sehr klein ist, schlecht oder gar nicht erkannt werden können. Solche Fremdkörper können beispielsweise dünne Drahtstücke sein, die längs im Förderstrom des Gutes liegen.

DE 37 14 009 A1 offenbart einen Detektor zum Erkennen von metallischen Fremdkörpern in einem Förderstrom von bewegtem Gut, der ein elektromagnetisches Feld aufbauende, vom Förderstrom des Gutes durchlaufene Spulenkörpern umfasst, wobei mindestens zwei Spulenkörper vorgesehen sind, die in einer unterschiedlichen Winkellage zum Förderstrom des Gutes angeordnet sind.

Es hat sich herausgestellt, dass der bekannte Detektor insbesondere im Hinblick auf die Erkennung der oben erwähnten längs im Förderstrom angeordneten elektrisch leitenden Elemente Messungenauigkeiten aufweist.

DE 44 24 058 C1 offenbart eine Einrichtung zur Erzeugung eines Erkennungssignals beim Auftreten metallisch leitender Teile in einem Förderstrom.

Der Erfindung liegt die Aufgabe zugrunde, eine Maschine mit einer Messvorrichtung bereitzustellen, deren Aufspürsicherheit für metallische Gegenstände in einem Massenstrom oder -strang oder stabförmigen Artikel der Tabak verarbeitenden Industrie erhöht ist.

Die vorliegende Aufgabe wird durch eine Maschine mit einer Messvorrichtung mit den Merkmalen des Anspruchs 1 gelöst.

Die erfindungsgemäße Messvorrichtung zum Erkennen von in einem Materialstrom oder -strang oder stabförmigen Artikel der Tabak verarbeitenden Industrie befindlichen elektrisch leitenden Elementen ist so ausgebildet, dass der mindestens ein Sender im Bereich des Materialstroms oder -strangs oder in dem stabförmigen Artikel ein hochfrequentes Magnetfeld erzeugt. Das hochfrequente Magnetfeld induziert in dem im Materialstrom- oder Strang oder stabförmigen Artikel befindlichen elektrisch leitenden Element Wirbelströme. Weiterhin weist die erfindungsgemäße Messvorrichtung mindestens einen Empfänger auf, der die Schwächung und/oder Verstärkung des hochfrequenten Magnetfelds durch die induzierten Wirbelströme misst.

Die vorliegende Messvorrichtung basiert auf dem Prinzip der Wirbelstrommessung. Wirbelstromsensoren kommen in der Industrie zur Detektion von Oberflächen oder zur Abstandsmessung von metallischen/ ferromagnetischen Gegenständen zum Einsatz.

Bei der vorliegenden Erfindung ist jedoch erkannt worden, dass das Prinzip der Wirbelstrommessung auch vorteilhaft zur Erkennung von elektrisch leitenden Elementen, die sich entfernt und beabstandet von einer Oberfläche in einem Materialstrom oder -strang oder in stabförmigen Artikeln befinden, verwendet werden kann.

Erfindungsgemäß weist die Messvorrichtung weiter eine Einrichtung zur Auswertung der Messergebnisse des Empfängers auf, die mit dem Empfänger gekoppelt ist. Die Auswerteeinrichtung kann direkt am Messort oder auch an einem vom Messort entfernten Ort angeordnet sein. Sie kann eine eigenständige Auswerteinrichtung oder Teil einer zentralen Auswerteeinrichtung sein.

Weiterhin kann die Auswerteeinrichtung so ausgebildet sein, dass sie in der Lage ist, die Position des elektrisch leitenden Elements als auch dessen Größe, Länge sowie weitere Eigenschaften des Elements zu erkennen.

Eine vorteilhafte Ausgestaltung der Erfindung sieht vor, dass es sich bei dem Sender um eine Erregerspule handelt.

Der Empfänger der Messvorrichtung kann vorteilhaft als Empfangsspule ausgebildet sein. Über die Empfangsspule, die im Inneren der Sendespule integriert sein kann, kann die Schwächung des Magnetfeldes gemessen werden. Statt einer Empfangsspule kann das Magnetfeld auch mit einem anderen Sensortyp zum Beispiel einem Hall-Sensor gemessen werden.

In einer vorteilhaften Ausgestaltung kann der Empfänger auch als Differenzsensor ausgebildet sein. Bei einem Differenzsensor sind zwei Empfangsspulen vorgesehen, die nebeneinander angeordnet sind. Für die Auswertung wird die von beiden Empfängern erzeugte Spannungsdifferenz herangezogen.

Der Empfänger kann auch als Mehrpolsensor oder Transmissionssensor ausgebildet sein. Bei diesen Sensoren befindet sich der Empfänger nicht innerhalb der Sendespule.

Der Empfänger kann als elektrische Schaltung ausgebildet sein, die eine Änderung der Induktion, insbesondere eine Abnahme oder Zunahme detektiert.

Erfindungsgemäß umfasst die Messvorrichtung mindestens zwei Sensoreinheiten, wobei eine Sensoreinheit aus mindestens einem Sender und mindestens einem Empfänger eine Sensoreinheit gebildet wird. Die Sensoreinheiten können zu einem Sensorarray angeordnet sein, insbesondere zeilenförmig oder matrixförmig. Denkbar ist auch, dass die Sensoreinheiten um einen Materialstrang angeordnet sind. Die Sensoreinheiten können sich ringförmig um einen Materialstrang erstreckend oder linear quer zur Transportrichtung nebeneinander angeordnet sein.

Es hat sich als vorteilhaft erwiesen, dass die Messvorrichtung weiterhin auch mindestens einen optischen Sensor umfasst, da die Messergebnisse des optischen Sensors hilfreich für die Auswertung zur Erkennung des elektrisch leitenden Elements sind. Mit einem optischen Sensor werden vorteilhaft Änderungen und/oder Abweichungen der Strangposition von einer Solllage detektiert, vorzugsweise queraxiale Abweichungen bei Längsförderung und längsaxiale Abweichungen bei Querförderung des Materialstroms, des Materialstrangs oder der stabförmigen Artikel. Die Änderungen und/oder Abweichungen werden beim Auswerten der Messergebnisse berücksichtigt, wonach kurzzeitige Bewegungen aus einem "Messfenster" zum Ermitteln der Position des Elements oder der Verteilung von mehreren Elementen, wie insbesondere Charcoal und/oder Metallgranulat berücksichtigt werden können. Auf diese Weise können Fehlinterpretationen vermieden werden, bei einem Strang oder Artikel, welcher alle Qualitätskriterien erfüllt, aber um einen gewissen Betrag aus dem Messfenster geraten ist, etwa queraxial oder längsaxial verschoben gegenüber dem vorgesehenen Messbereich verschoben wurde.

Die vorliegende Aufgabe wird auch durch ein Verfahren zum Erkennen von in einem Materialstrom oder -strang oder stabförmigen Artikel der Tabak verarbeitenden Industrie befindlichen elektrisch leitenden Elementen gelöst, bei dem ein elektromagnetischen Felds im Bereich des Materialstroms oder -strangs oder stabförmigen Artikels erzeugt wird.

Erfindungsgemäß ist vorgesehen, dass es sich bei dem elektromagnetischen Feld um ein hochfrequentes Magnetfeld handelt, wodurch in dem im Materialstrom oder -strang oder stabförmigen Artikel sich befindenden elektrisch leitenden Element Wirbelströme induziert werden, die zu einer Schwächung des Magnetfelds führen. In einem nächsten Schritt wird die Schwächung des Magnetfeldes erfasst und anschließend die erfasste Schwächung des Magnetfeldes ausgewertet.

In einer Ausgestaltung des erfindungsgemäßen Verfahrens werden über die Auswertung Eigenschaften des elektrisch leitenden Elementes erfasst. Hierbei kann es sich z. B. über die Position des Elementes oder dessen Größe handeln. Insbesondere kann die Auswertung des Elementes dahingehend erfolgen, zu erkennen, ob es sich bei dem Element um ein "ungewolltes" Element handelt.

Die ausgewerteten Messergebnisse können dann, gemäß einer weiteren Ausgestaltung der Erfindung, zur Regelung und/ oder Steuerung einer Maschine der Tabak verarbeitenden Industrie verwendet werden. Dies ist insbesondere für die Entfernung der als ungewollt erkannten Elemente vorteilhaft. Durch das Erkennen eines ungewollten Elementes und das Ermitteln der Position z. B. in einem Materialstrang kann über die Regelung und/ oder Steuerung ermittelt werden, wann das Element aus dem Herstellungsverfahren entfernt werden kann. Das Entfernen kann über ein Ausschleusen in einem nachfolgenden Maschinenabschnitt mittels einer Ausschleusvorrichtung erfolgen, welche in Abhängigkeit des Messerergebnisses von der Maschinensteuerung angesteuert wird.

Die oben genannte Aufgabe wird durch eine Maschine zur Herstellung von Produkten der Tabak verarbeitenden Industrie gelöst, wobei in der Maschine mindestens eine erfindungsgemäße Messvorrichtung angeordnet ist. Bei der Maschine zur Herstellung von Produkten der Tabak verarbeitenden Industrie kann es sich zum Beispiel um eine bekannte Filterherstellmaschine AF/KDF wie in US 3974007, US 4412505, EP 2633769 A1, Fig. 1-10, oder WO 2005/058079 A1 beschrieben oder Zigarettenherstellmaschine handeln, die einen Verteiler, eine Strangeinheit und einen Filteransetzer umfasst, wie in US 5135008, EP 1330961 B1 oder WO 2000/16647 A1 beschrieben. Eine solche Zigarettenherstellmaschine ist beispielweise unter dem Namen "Protos" bekannt und wird von der Patentanmelderin hergestellt.
- Fig. 1: Schematische Darstellung einer Zigarettenmaschine
- Fig. 2: Darstellung des Wirbelstromprinzips
- Fig. 3: Messvorrichtung mit Hall-Sensor
- Fig. 4: Messvorrichtung als Sensorarray mit Auswerteinrichtung
- Fig. 5: Messvorrichtung um Materialstrang

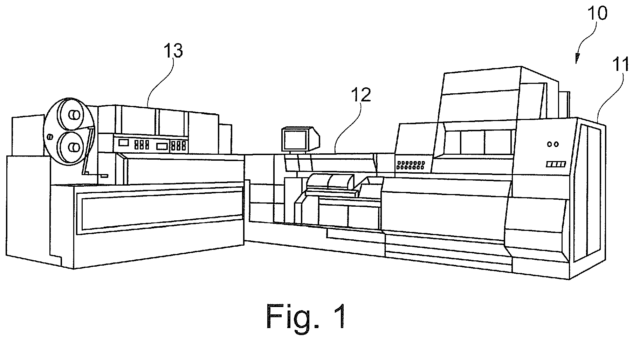

Wie oben bereits erwähnt, kann die erfindungsgemäße Messvorrichtung in einer wie in Fig. 1 dargestellten Zigarettenherstellmaschine angeordnet sein.

Die Zigarettenherstellmaschine umfasst einen Verteiler 11, eine Strangeinheit 12 und einen nachfolgend angeordneten Filteransetzer 13. Der Verteiler 11 umfasst ein auch als Kiepe bezeichnetes Tabakreservoir, das von oben mit Tabakmaterial befüllt wird. Aus dem Tabakreservoir wird mittels eines Steilförderers Tabak entnommen. Der Verteiler umfasst des Weiteren einen Stauschacht, aus dem der Tabak mittels einer Vereinzelungsvorrichtung entnommen und dadurch vereinzelt wird, und eine Sichtvorrichtung zum Sichten des Tabaks, insbesondere zum Aussichten von Rippen aus dem Tabakmaterial. Die Sichtvorrichtung kann beliebig ausgeführt sein; in einer nicht gezeigten Ausführungsform kann es sich beispielsweise um einen Zickzack-Sichter handeln.

Schließlich wird der gesichtete Tabak gegen mindestens einen Saugstrangförderer bzw. ein Saugband geschleudert, an dem der Tabak mittels in einer Unterdruckkammer erzeugtem Unterdruck gehalten und ein Tabakstrang aufgeschauert wird. Mittels eines Trimmers wird überschüssiger Tabak von dem Tabakstrang entfernt und gelangt beispielsweise mittels eines Förderbands in einen Behälter aus dem der rückgeführte Tabak von dem Steilförderer 15 wieder entnommen werden kann.

In der Strangeinheit 12 wird dann der Tabakstrang auf einen im Gleichlauf oder mit geringerer Übergeschwindigkeit geführten Zigarettenpapierstreifen gelegt, der von einer Bobine abgezogen und auf ein angetriebenes Formatband gelegt wird. Das Formatband transportiert den Tabakstrang und den Zigarettenpapierstreifen durch ein Format, in dem der Zigarettenpapierstreifen um den Tabakstrang gefaltet wird. Eine abstehende Kante des Zigarettenpapierstreifens wird mittels eines Leimapparats beleimt. Anschließend wird die Klebenaht geschlossen und getrocknet, so dass auf diese Weise mindestens ein mit Zigarettenpapier umhüllter Tabakstrang erzeugt wird. Der Tabakstrang wird von einem Messerapparat in doppeltlange Tabakstöcke geschnitten, die von einer Übergabevorrichtung an eine Übernahmetrommel der Filteransetzmaschine 13 übergeben werden.

Die Filteransetzmaschine 13 umfasst Trommelanordnungen mittels der Tabakstöcke doppelter Gebrauchslänge von der Strangeinheit 12 übernommen werden und in Tabakstöcke einfacher Gebrauchslänge geschnitten werden. Anschließend werden die geschnittenen Tabakstöcke in längsaxialer Richtung gespreizt und voneinander beabstandet. Der Abstand zwischen den sich gegenüberliegenden Kopfenden der längsaxial beabstandeten Tabakstöcke ist so groß, dass in einem nachfolgenden Schritt ein, vorzugsweise doppelt langer, Filterstopfen zwischen die längsaxial beabstandeten Tabakstöcke eines Tabakstockpaares eingelegt wird.

Die zusammengestellten stabförmigen Artikelgruppen, bestehend aus Tabakstock-Filterstopfen-Tabakstock-Gruppen, werden mit Belagpapier umhüllt und die doppeltlangen Filterzigaretten werden zu einer Schneidtrommel gefördert, zu der benachbart ein Schneidmesser angeordnet ist, welches aus den doppeltlangen Filterzigaretten durch einen mittigen Trennschnitt Filterzigaretten einfacher Gebrauchslänge herstellt.

Es ist denkbar, dass die erfindungsgemäße Messvorrichtung sowohl im Verteiler 11 als auch in der Strangeinheit 12 oder in dem Filteransetzer 13 vorgesehen sein kann. Die erfindungsgemäße Messvorrichtung kann auch am oder vor dem Eingang, im Format und/oder am Ende einer Strangeinheit einer Filterherstellmaschine der eingangs zitierten Typen angeordnet sein.

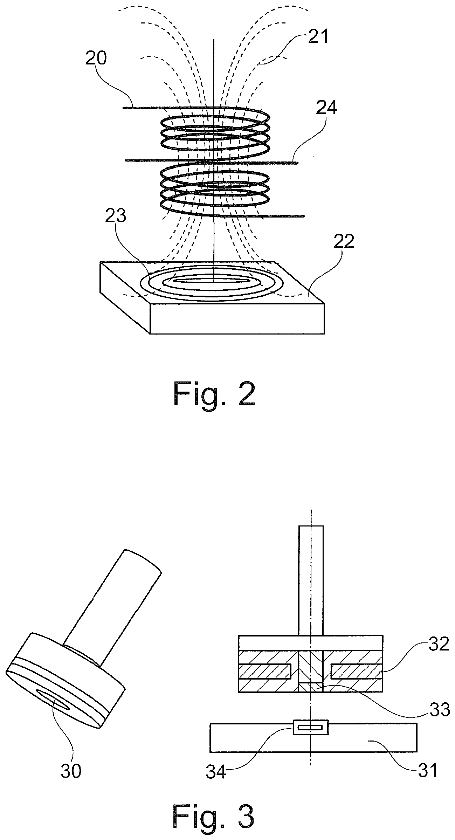

Die Fig. 2 zeigt das erfindungsgemäße Prinzip der erfindungsgemäßen Messvorrichtung. Wird durch eine Erregerspule 20 ein Magnetfeld 21 erzeugt und ein elektrisch leitendes Element 22 durch das Magnetfeld 21 bewegt, dann werden in dem elektrisch leitenden Element Wirbelströme 23 erzeugt, weil im leitenden Material eine Spannung induziert wird. Die induzierten Wirbelströme 23 erzeugen ihrerseits wieder ein Magnetfeld, welches das Magnetfeld 21 schwächt. Die Schwächung und/oder Verstärkung des Magnetfeldes 21 infolge von einem Auftreten oder Ausbleiben und/oder von einer längsaxialen und/oder queraxialen Lageänderung eines oder mehrerer elektrisch leitender Elemente kann über eine Empfangsspule 24 gemessen werden. Statt einer Empfangsspule kann das Magnetfeld auch mit einem anderen Sensortyp gemessen werden, z. B. mit einem Hall-Sensor.

In der Fig. 3 ist eine Messvorrichtung 30 mit einem Hall-Sensor dargestellt. Die Messvorrichtung 30 wird über ein Messobjekt 31 mit einem elektrisch leitenden Element 34 geführt. Über eine in der Messvorrichtung angeordnete Erregerspule 32 wird ein Magnetfeld erzeugt, dass in dem elektrisch leitenden Element 34 einen Wirbelstrom induziert. Die Schwächung und/oder Verstärkung des Magnetfelds durch die induzierten Wirbelströme infolge von einem Auftreten/Ausbleiben und/oder von Lageänderungen des oder der elektrisch leitenden Elemente wird über den in der Messvorrichtung angeordneten Hall-Sensor 33 gemessen.

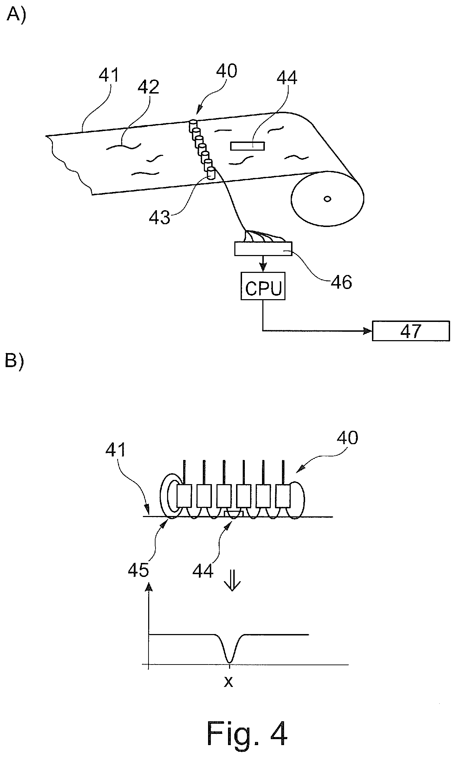

Eine Anwendung der erfindungsgemäßen Messvorrichtung ist die Anordnung im Verteiler 11 zum Beispiel im Bereich der Sichtvorrichtung zum Sichten des Tabaks, wie in den Ausführungen zur Fig. 1 beschrieben. Ein Ausführungsbeispiel für eine solche Messvorrichtung ist in Fig. 4 A dargestellt.

Bei dem Ausführungsbeispiel gemäß Fig. 4A ist eine Messvorrichtung 40 über einer Sichtvorrichtung 41 in einem Verteiler dargestellt. Auf der Sichtvorrichtung 41 wird ein Tabakstrom bestehend aus lose angeordnete Tabakfasern 42 zur nicht dargestellten Formateinrichtung transportiert und gesichtet. Die Messvorrichtung 40 umfasst sechs Sensoreinheiten 43, die nebeneinander in Form eines Sensorarrays quer zur Transportrichtung über der Sichtvorrichtung 41 angeordnet sind. Eine Sensoreinheit wird aus einem Sender und einem Empfänger gebildet. In dem Tabakmassenstrom befindet sich ein längliches elektrisch leitendes Element 44, z. B. ein Metallstreifen. Wird das Element 44 an der Messvorrichtung vorbeigeführt, wird durch die Messvorrichtung 40 ein Wirbelstrom in dem Element 44 induziert und das durch die Messvorrichtung 40 erzeugte Magnetfeld wird geschwächt, wie es in dem Diagramm in Fig. 4B) dargestellt ist. Die Messergebnisse der jeweiligen Sensoreinheit 43 werden an eine Auswerteeinheit 46 weitergeleitet, die darüber die Position des Elementes 44 bestimmt und das anschließende Entfernen 47 des Elementes 44 bewirkt, wenn es sich dabei um einen ungewollten Fremdkörper handelt.

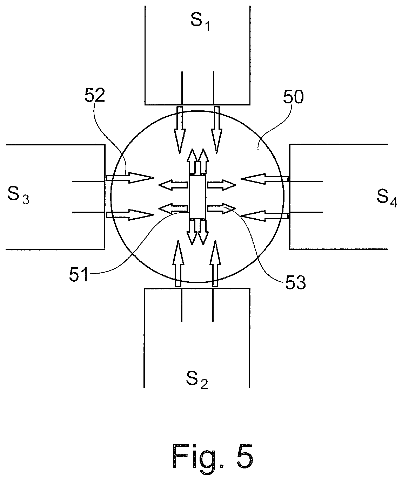

Fig. 5 zeigt eine Anordnung von vier Sensoreinheiten S1, S2, S3, S4 um einen Materialstrang 50 oder einen stabförmigen Artikel. In dem Materialstrang 50 befindet sich ein elektrisch leitendes Element 51 in Form eines metallischen Drahtstücks 51. Die Verwendung von gegenüberliegenden Sensoren S1 und S2 sowie S3 und S4 ermöglicht die Ermittlung der Position sowie der Größe des elektrisch leitenden Elementes in radialer Richtung. Einander gegenüberliegende Sensoren wie S1 und S2 oder S3 und S4 weisen zueinander einen Abstand von 2 bis 15 mm, bevorzugt von 4 bis 12 mm und besonders bevorzugt von 5 bis 9 mm auf.

In Umfangsrichtung eines Stranges angeordnete Sensoren sind in Umfangsrichtung um 10 bis 180 Grad, bevorzugt um 25 bis 90 Grad zueinander versetzt angeordnet.

Die Anordnung der induktiven Sensoren, wie in Fig. 5 dargestellt, misst die Position des Elements im Messsystem, also mit Bezug zu den Sensoren. Weicht die Lage des Materialstrangs oder stabförmigen Artikels jedoch von seiner Sollposition ab, so stimmt die ermittelte Position des Elements mit Bezug zum Materialstrang oder stabförmigen Artikel nicht mehr.

Zu diesem Zweck ist es vorteilhaft, die Lage des Materialstrangs oder stabförmigen Artikels (in X-/Y-Richtung) gesondert zu ermitteln. Dies könnte zum Beispiel über eine optische Messeinrichtung, wie z. B. einer Laser-Triangulations-Messung erfolgen.

Bei der vorliegenden Erfindung werden Änderungen des hochfrequenten Magnetfeldes durch die induzierten Wirbelströme erfasst, während sich der Materialstrom oder -strang oder die stabförmigen Artikel bewegen, wonach jedes Auftreten oder Ausbleiben und/oder jede Lageänderung eines oder mehrerer leitender Elemente in dem Strang oder dem Artikel online durch eine Schwächung und/oder eine Verstärkung des Magnetfels detektiert wird. Auf diese Weise können elektrisch leitende Elemente als ungewollte Fremdkörper oder als gewollte Bestandteile zuverlässig erkannt beziehungsweise auf gewünschte Qualitätsparameter geprüft werden.

Das Erfassen und Auswerfen der Änderungen des hochfrequenten Magnetfeldes erfolgt mit einer Abtastfrequenz von 1 bis 200 kHz, bevorzugt 5 bis 100 kHz, was eine optimale Ortsauflösung erlaubt. Die Messvorrichtung weist eine hierzu ausgebildete und eingerichtete Auswerteschaltung auf, wonach eine Ortsauflösung bis in den Bereich von einem zehntel Millimeter ermöglicht ist, selbst bei einem schnell bewegten Strang oder Artikel.

## Patentansprüche

1. Maschine (10) zur Herstellung von Produkten der Tabak verarbeitenden Industrie, wobei in der Maschine (10) mindestens eine Messvorrichtung zum Erkennen von in einem Materialstrom (31, 41) oder -strang (50) oder stabförmigen Artikel der Tabak verarbeitenden Industrie befindlichen elektrisch leitenden Elementen (34, 44, 51) angeordnet ist, umfassend mindestens einen Sender, der im Bereich des Materialstroms oder -strangs oder in dem stabförmigen Artikel ein elektromagnetisches Feld aufbaut, wobei der Sender (20, 32) ein hochfrequentes Magnetfeld (21) erzeugt, das in dem im Materialstrom (31, 41) oder -strang (50) oder stabförmigen Artikel befindlichen elektrisch leitenden Element (34, 44, 51) Wirbelströme (23) induziert, weiterhin mindestens ein Empfänger (24, 33) vorgesehen ist, der die Schwächung und/oder Verstärkung des hochfrequenten Magnetfelds durch die induzierten Wirbelströme (23) misst, sowie eine mit dem Empfänger (24, 33) gekoppelte Einrichtung (46, 47) zur Auswertung der Messergebnisse des Empfängers (24, 33), wobei mindestens ein Sender und mindestens ein Empfänger eine Sensoreinheit (43, S1, S2, S3, S4) bilden, wobei die Messvorrichtung mindestens zwei Sensoreinheiten (43, S1, S2, S3, S4) umfasst, **dadurch gekennzeichnet, dass** die Sensoreinheiten (S1 und S2; S3 und S4) einander gegenüberliegend um einen Materialstrang (50), oder als Sensorarray (43) in Form einer Zeile oder einer Matrix quer zur Transportrichtung angeordnet sind.

2. Maschine gemäß Anspruch 1, **dadurch gekennzeichnet, dass** der Sender als Erregerspule (24, 34) ausgebildet ist.

3. Maschine gemäß einem der vorhergehenden Ansprüche 1 oder 2, **dadurch gekennzeichnet, dass** der Empfänger als Empfangsspule (24) ausgebildet ist.

4. Maschine gemäß einem der vorhergehenden Ansprüche 1 oder 2, **dadurch gekennzeichnet, dass** der Empfänger als Hallsensor (33) ausgebildet ist.

5. Maschine gemäß einem der vorhergehenden Ansprüche 1 oder 2, **dadurch gekennzeichnet, dass** der Empfänger als Differenzsensor ausgebildet ist.

6. Maschine gemäß einem der vorhergehenden Ansprüche 1 oder 2, **dadurch gekennzeichnet, dass** der Empfänger als Mehrpolsensor oder Transmissionssensor ausgebildet ist.

7. Maschine gemäß einem der vorhergehenden Ansprüche, **dadurch gekennzeichnet, dass** die mindestens zwei Sensoreinheiten (S1, S2, S3, S4) ringförmig um einen Materialstrang herum (50) angeordnet sind, mit einer Durchtrittsöffnung diametral einander gegenüberliegend unter Ausbildung eines Durchtrittskanals für den Strang oder den Artikel.

8. Maschine gemäß einem der vorhergehenden Ansprüche, **dadurch gekennzeichnet, dass** die Vorrichtung weiterhin mindestens einen optischen Sensor umfasst.

9. Verfahren zum Erkennen von in einem Materialstrom (31, 41) oder -strang (50) oder stabförmigen Artikel der Tabak verarbeitenden Industrie befindlichen elektrisch leitenden Elementen (34, 44, 51) mittels einer Messvorrichtung umfassend mindestens einen Sender (20, 32) und mindestens einen Empfänger (24, 33), mit den folgenden Schritten:
- Erzeugen eines elektromagnetischen Felds im Bereich des Materialstroms (31, 41) oder -strangs (50) oder stabförmigen Artikels mittels des mindestens einen Senders (20, 32),
- wobei es sich bei dem elektromagnetischen Feld um ein hochfrequentes Magnetfeld (21) handelt, wodurch in dem im Materialstrom (31, 41) oder -strang (50) oder stabförmigen Artikel sich befindenden elektrisch leitenden Element (34, 44, 51) Wirbelströme (23) induziert werden, die zu einer Schwächung und/oder Verstärkung des Magnetfelds (21) führen,
- Erfassen der Schwächung und/oder Verstärkung des Magnetfeldes (21) mittels des mindestens einen Empfängers (24, 33),
- Auswerten der erfassten Schwächung und/oder Verstärkung des Magnetfeldes (21),
wobei mindestens ein Sender und mindestens ein Empfänger eine Sensoreinheit (43, S1, S2, S3, S4) bilden, wobei die Messvorrichtung mindestens zwei Sensoreinheiten (43, S1, S2, S3, S4) umfasst, **dadurch gekennzeichnet, dass** die Sensoreinheiten (S1 und S2; S3 und S4) einander gegenüberliegend um einen Materialstrang (50), oder als Sensorarray (43) in Form einer Zeile oder einer Matrix quer zur Transportrichtung angeordnet sind.

10. Verfahren gemäß Anspruch 9, **dadurch gekennzeichnet, dass** über die Auswertung Eigenschaften des elektrisch leitenden Elements (34, 44, 51) ermittelt werden.

11. Verfahren nach Anspruch 9 oder 10, **dadurch gekennzeichnet, dass** die Ergebnisse der Auswertung zur Regelung oder Steuerung einer Maschine (10) der Tabak verarbeitenden Industrie verwendet werden.

## Claims

1. Machine (10) for manufacturing products of the tobacco-processing industry, wherein at least one measuring apparatus is arranged in the machine (10) for detecting electrically conductive elements (34, 44, 51) in a material stream (31, 41) or strand (50) or rod-shaped article of the tobacco-processing industry, comprising at least one transmitter which, in the region of the material stream or strand or in the rod-shaped article, builds up an electromagnetic field, wherein the transmitter (20, 32) produces a high-frequency magnetic field (21) which induces eddy currents (23) in the electrically conductive element (34, 44, 51) in the material stream (31, 41) or strand (50) or rod-shaped article, at least one receiver (24, 33) is also provided which measures the attenuation and/or amplification of the high-frequency magnetic field by the induced eddy currents (23) as well as a device (46, 47) coupled to the receiver (24, 33) for evaluating the measurement results from the receiver (24, 33), wherein at least one transmitter and at least one receiver form a sensor unit (43, S1, S2, S3, S4), wherein the measuring apparatus comprises at least two sensor units (43, S1, S2, S3, S4), **characterized in that** the sensor units (S1 and S2, S3 and S4) are arranged opposite each other around a material strand (50), or as a sensor array (43) in the form of a row or a matrix transverse to the transport direction.

2. Machine according to claim 1, **characterised in that** the transmitter is designed as an exciter coil (24, 34).

3. Machine according to any one of the preceding claims 1 or 2, **characterised in that** the receiver is designed as a receiver coil (24).

4. Machine according to any one of the preceding claims 1 or 2, **characterised in that** the receiver is designed as a Hall sensor (33).

5. Machine according to any one of the preceding claims 1 or 2, **characterised in that** the receiver is designed as a differential sensor.

6. Machine according to any one of the preceding claims 1 or 2, **characterised in that** the receiver is designed as a multipole sensor or transmission sensor.

7. Machine according to any one of the preceding claims, **characterised in that** the at least two sensor units (S1, S2, S3, S4) are arranged circularly around a material strand (50) with a through-hole, diametrically opposing one another and forming a through-channel for the strand or the article.

8. Machine according to any one of the preceding claims, **characterised in that** the apparatus also comprises at least one optical sensor.

9. Method for detecting electrically conductive elements (34, 44, 51) in a material stream (31, 41) or strand (50) or rod-shaped article of the tobacco-processing industry by means of a measuring apparatus comprising at least one transmitter (20, 32) and at least one receiver (24, 33), having the following steps:
- producing an electromagnetic field in the region of the material stream (31, 41) or strand (50) or rod-shaped article by means of the at least transmitter (20,32),
- wherein the electromagnetic field is a high-frequency magnetic field (21) whereby eddy currents (23) are induced in the electrically conductive element (34, 44, 51) in the material stream (31, 41) or strand (50) or rod-shaped article which lead to an attenuation and/or amplification of the magnetic field (21),
- detecting the attenuation and/or amplification of the magnetic field (21) by means of the at least one receiver (24, 33),
- evaluating the detected attenuation and/or amplification of the magnetic field (21),
wherein at least one transmitter and at least one receiver form a sensor unit (43, S1, S2, S3, S4), wherein the measuring apparatus comprises at least two sensor units (43, S1, S2, S3, S4), **characterized in that** the sensor units (S1 and S2; S3 and S4) are arranged opposite each other around a material strand (50), or as a sensor array (43) in the form of a row or a matrix transverse to the transport direction.

10. The method according to claim 9, **characterised in that** properties of the electrically conductive element (34, 44, 51) are determined via the evaluation.

11. The method according to claim 9 or 10, **characterised in that** the results of the evaluation are used to regulate or control a machine (10) of the tobacco-processing industry.

## Revendications

1. Machine (10) pour la fabrication de produits de l'industrie de traitement du tabac, dans laquelle machine (10) est disposé au moins un dispositif de mesure pour détecter des éléments électriquement conducteurs (34, 44, 51) se trouvant dans un flux de matériau (31, 41) ou un boudin de matériau (50) ou dans un article en forme de tige de l'industrie de traitement du tabac, comprenant au moins un émetteur qui établit un champ électromagnétique dans la zone du flux de matériau ou du boudin de matériau ou dans l'article en forme de tige, l'émetteur (20, 32) générant un champ magnétique à haute fréquence (21) qui induit des courants de Foucault (23) dans l'élément électriquement conducteur (34, 44, 51) se trouvant dans le flux de matériau (31, 41) ou le boudin de matériau (50) ou dans l'article en forme de tige, au moins un récepteur (24, 33) qui mesure l'atténuation et/ou l'amplification du champ magnétique à haute fréquence par les courants de Foucault (23) induits ainsi qu'un moyen (46, 47), accouplé au récepteur (24, 33), pour évaluer les résultats de mesure du récepteur (24, 33) étant en outre prévus, au moins un émetteur et au moins un récepteur formant une unité de détection (43, S1, S2, S3, S4), le dispositif de mesure comprenant au moins deux unités de détection (43, S1, S2, S3, S4), **caractérisée en ce que** les unités de détection (S1 et S2 ; S3 et S4) sont disposées en face l'une de l'autre autour d'un boudin de matériau (50) ou sous la forme d'un réseau de détection (43) en forme de ligne ou de matrice transversalement à la direction de transport.

2. Machine selon la revendication 1, **caractérisée en ce que** l'émetteur est réalisé sous la forme d'une bobine d'excitation (24, 34).

3. Machine selon l'une des revendications précédentes 1 ou 2, **caractérisée en ce que** le récepteur est réalisé sous la forme d'une bobine de réception (24).

4. Machine selon l'une des revendications précédentes 1 ou 2, **caractérisée en ce que** le récepteur est réalisé sous la forme d'un capteur à effet Hall (33).

5. Machine selon l'une des revendications précédentes 1 ou 2, **caractérisée en ce que** le récepteur est réalisé sous la forme d'un capteur différentiel.

6. Machine selon l'une des revendications précédentes 1 ou 2, **caractérisée en ce que** le récepteur est réalisé sous la forme d'un capteur multipolaire ou d'un capteur de transmission.

7. Machine selon l'une des revendications précédentes, **caractérisée en ce que** lesdites au moins deux unités de détection (S1, S2, S3, S4) sont disposées en forme d'anneau autour d'un boudin de matériau (50), diamétralement en face l'une de l'autre avec une ouverture de passage, en formant un canal de passage pour le boudin ou l'article.

8. Machine selon l'une des revendications précédentes, **caractérisée en ce que** le dispositif comprend en outre au moins un capteur optique.

9. Procédé pour détecter des éléments électriquement conducteurs (34, 44, 51) se trouvant dans un flux de matériau (31, 41) ou un boudin de matériau (50) ou dans un article en forme de tige de l'industrie de traitement du tabac au moyen d'un dispositif de mesure comprenant au moins un émetteur (20, 32) et au moins un récepteur (24, 33), comprenant les étapes consistant à :
- générer un champ électromagnétique dans la zone du flux de matériau (31, 41) ou du boudin de matériau (50) ou de l'article en forme de tige au moyen dudit au moins un émetteur (20, 32),
- le champ électromagnétique étant un champ magnétique à haute fréquence (21), de sorte que des courants de Foucault (23) sont induits dans l'élément électriquement conducteur (34, 44, 51) se trouvant dans le flux de matériau (31, 41) ou le boudin de matériau (50) ou dans l'article en forme de tige, lesquels entraînent une atténuation et/ou une amplification du champ magnétique (21),
- détecter l'atténuation et/ou l'amplification du champ magnétique (21) au moyen dudit au moins un récepteur (24, 33),
- évaluer l'atténuation et/ou l'amplification détectée du champ magnétique (21), au moins un émetteur et au moins un récepteur formant une unité de détection (43, S1, S2, S3, S4), le dispositif de mesure comprenant au moins deux unités de détection (43, S1, S2, S3, S4), **caractérisé en ce que** les unités de détection (S1 et S2 ; S3 et S4) sont disposées en face l'une de l'autre autour d'un boudin de matériau (50) ou sous la forme d'un réseau de détection (43) en forme de ligne ou de matrice transversalement à la direction de transport.

10. Procédé selon la revendication 9, **caractérisé en ce que** l'évaluation permet de déterminer des propriétés de l'élément électriquement conducteur (34, 44, 51).

11. Procédé selon la revendication 9 ou 10, **caractérisé en ce que** les résultats de l'évaluation sont utilisés pour la régulation ou la commande d'une machine (10) de l'industrie de traitement du tabac.
